(19) Europäisches Patentamt / European Patent Office / Office européen des brevets

(11) **EP 3 532 874 B1**

(12) **FASCICULE DE BREVET EUROPEEN**

(45) Date de publication et mention de la délivrance du brevet:
**25.11.2020 Bulletin 2020/48**

(21) Numéro de dépôt: **17788245.3**

(22) Date de dépôt: **25.10.2017**

(51) Int Cl.:
*G01T 1/24* (2006.01)          *G01T 1/36* (2006.01)

(86) Numéro de dépôt international:
**PCT/EP2017/077322**

(87) Numéro de publication internationale:
**WO 2018/077955 (03.05.2018 Gazette 2018/18)**

(54) **DISPOSITIF DE SPECTROMÉTRIE**

SPEKTROMETRIEVORRICHTUNG

SPECTROMETRY DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.10.2016 FR 1660418**

(43) Date de publication de la demande:
**04.09.2019 Bulletin 2019/36**

(73) Titulaire: **Detection Technology SAS 38430 Moirans (FR)**

(72) Inventeurs:
• **MARCHE, Eric**
  **38430 Moirans (FR)**
• **LUX, Silvère**
  **38430 Moirans (FR)**

(74) Mandataire: **Marks & Clerk France Immeuble "Visium" 22, avenue Aristide Briand 94117 Arcueil Cedex (FR)**

(56) Documents cités:
**WO-A1-2013/006453      US-A1- 2005 230 632**

**EP 3 532 874 B1**

## Description

L'invention se situe dans le domaine de l'imagerie par rayonnement ionisant, par exemple utilisant des rayonnements X ou gamma. Elle s'applique à l'imagerie médicale et au contrôle non destructif tel que le contrôle de bagages. Elle concerne un dispositif de traitement d'un flux de photons.

Les systèmes d'imagerie par rayonnement X sont notamment utilisés pour le contrôle de bagages dans des aéroports ou dans des lieux sécurisés. Un tel système d'imagerie comprend une source de rayonnement X soumettant les bagages à un flux de photons X et un détecteur à semi-conducteur recevant les photons X ayant traversé les bagages. En fonction de l'absorption du rayonnement X par les bagages, il est possible d'analyser le contenu des bagages. L'analyse du contenu des bagages et l'évaluation de sa dangerosité sont des étapes plus ou moins complexes et automatisées selon qu'il s'agit de bagages destinés à la soute ou de bagages transportés par les passagers en cabine. Dans les deux cas, les systèmes d'imagerie par rayonnement X ont pour objectif de détecter des substances dangereuses telles que des explosifs et des matières inflammables. Avec l'évolution des exigences en matière de sécurité, il devient nécessaire de pouvoir déterminer tout type de substance afin, par exemple, d'identifier la présence de plusieurs substances qui, combinées entre elles, peuvent produire des explosifs.

Cette détermination peut se faire au moyen de dispositifs d'imagerie spectrométrique permettant de détecter chaque photon individuel d'une image (par exemple en rayons X), et de le quantifier en énergie, afin de faire une classification de ces photons dans un histogramme pour construire un spectre en énergie du flux incident.

La détection des photons X est faite par un détecteur qui convertit l'énergie déposée par les photons incidents en signal électrique. Un détecteur comprend par exemple un cristal configuré pour transformer l'énergie reçu d'un photon en paquets de charges, mesurés par un amplificateur de charge. D'autres détecteurs peuvent par exemple comprendre un scintillateur associé à une photodiode ou à un photomultiplicateur.

La qualité de la spectrométrie dépend principalement de l'aptitude à distinguer au mieux les photons X individuels les uns des autres. Le flux maximum de photons que le détecteur peut traiter en distinguant les différents photons dépend essentiellement des temps de réponse du détecteur et d'une chaîne de traitement disposée en aval du détecteur.

Dans les détecteurs existants, on constate une variation importante du temps de réponse due notamment à des dérives lors du démarrage du détecteur et au cours du temps. Des dérives importantes sont également dues à des variations de température du détecteur.

Pour pallier ce problème on a recours à une étape de stabilisation lors du démarrage, étape qui peut durer de l'ordre d'une heure, voir plus selon la température. Il est également nécessaire de prévoir des périodes d'arrêt régulières, ce qui est très contraignant en pratique.

Pour certains détecteurs, un signal de polarisation est appliqué. Dans le cas d'un détecteur mettant en œuvre un cristal semi-conducteur, le signal de polarisation est une haute tension. Un dispositif de spectrométrie d'un rayonnement de photons est connu de US2005230632.

Il est par exemple connu du document FR 2 925 170 A1 de disposer en sortie du détecteur un amplificateur de charge de type intégrateur. On fait transiter le signal de sortie de l'amplificateur par une ligne à retard et on réalise une soustraction du signal sortant de la ligne à retard et du signal sortant directement de l'amplificateur. L'amplitude de la sortie du soustracteur est alors fonction de l'énergie de chaque photon reçu par le détecteur. Cette mesure d'énergie fonctionne correctement tant que la durée de la ligne à retard est supérieure à la durée du front du signal sortant de l'amplificateur afin de distinguer au moyen du soustracteur la montée du signal en provenance directe de l'amplificateur et la descente du même signal inversé et retardé par la ligne à retard.

En revanche, si la durée de la ligne à retard est inférieure à celle du front sortant de l'amplificateur, un télescopage se produit dans le soustracteur et la mesure d'amplitude de l'impulsion sous-estime très significativement l'amplitude réelle du front du signal de sortie de l'amplificateur de charge, et donc l'énergie réelle déposée par le photon X. Comme cela revient à perdre dans ce cas une partie des charges générées par le détecteur, le rapport signal à bruit de la mesure est fortement dégradé. La mesure correcte de l'énergie d'un photon nécessite donc une durée de la ligne à retard suffisamment importante.

Par ailleurs, pour pouvoir distinguer au mieux les photons individuels les uns des autres, a priori répartis aléatoirement dans le temps, et quantifier correctement l'énergie que chacun a déposée sur le détecteur, il faut que les impulsions successives soient les plus distinctes possibles, donc les plus courtes possibles. Autrement dit, plus le flux de photons sera élevé, plus la durée de la ligne à retard doit être courte afin de permettre la distinction de chacun des photons.

Ces deux contraintes : mesure de l'énergie de chaque photon et distinction de chaque photon sont donc antagonistes au niveau du choix de la durée de la ligne à retard. En pratique pour un flux de photon important, typiquement plus de 1 million par seconde, il devient impossible de déterminer une durée de ligne à retard permettant à la fois de distinguer suffisamment les photons individuels (résolution des coïncidences), tout en quantifiant correctement l'énergie que chacun a déposé sur le détecteur.

L'invention vise à pallier tout ou partie des problèmes cités plus haut en proposant un dispositif de spectrométrie permettant de stabiliser le détecteur ou tout au moins de corriger les effets de l'instabilité du détecteur.

A cet effet, l'invention a pour objet un dispositif de spectrométrie d'un rayonnement de photons selon la revendication 1.

Le comparateur est avantageusement configuré pour établir une comparaison entre le signal électrique fonction de l'énergie d'un photon courant et le signal de référence sélectionné dans la base en fonction d'une valeur du premier paramètre définie à partir de valeurs du facteur de qualité délivrées par le comparateur recevant sur sa première entrée le signal électrique fonction de l'énergie de photons précédant le photon courant, et donner en sortie un signal représentatif de l'énergie du photon courant.

Dans un premier mode de réalisation, le dispositif comprend en outre un amplificateur de type intégrateur comprenant une entrée et une sortie, l'entrée de l'amplificateur étant raccordée à la sortie du détecteur. La base de référence est alors configurée pour générer plusieurs formes de signaux, chacune correspondant à une durée de front d'un signal délivré par l'amplificateur en réponse à la réception d'un photon par le détecteur.

La base de référence est avantageusement configurée pour associer à chaque forme de signaux une durée de front de référence formant le premier paramètre de la base de référence, la boucle d'asservissement asservissant la durée de front de référence à la durée de front d'un signal délivré par l'amplificateur en réponse à la réception d'un photon par le détecteur.

Le signal représentatif de la qualité de la comparaison est avantageusement représentatif d'un écart entre la durée de front d'un signal délivré par l'amplificateur et la durée de front de référence associée à la forme de signaux reçue par le comparateur. La boucle d'asservissement de la durée de front de référence à la durée de front d'un signal délivré par l'amplificateur est configurée pour modifier la durée front de référence afin de changer de forme de référence en fonction de la valeur du signal représentatif de la qualité de la comparaison.

La boucle d'asservissement de la durée de front de référence à la durée de front d'un signal délivré par l'amplificateur peut comprendre un multiplicateur de la valeur représentative par une constante de gain et un additionneur ajoutant un résultat issu du multiplicateur à la valeur courante de la durée front de référence.

Dans le premier mode de réalisation, le dispositif peut comprendre en outre :

- un soustracteur à deux entrées et une sortie, connecté à une première de ses entrées à la sortie de l'amplificateur, la sortie du soustracteur délivrant le signal électrique,
- une ligne à retard connectée entre la sortie de l'amplificateur et une seconde des deux entrées du soustracteur.

La ligne à retard peut être paramétrable au moyen de sa durée de retard et la base de référence peut être paramétrable au moyen d'un second paramètre formé par la durée de retard.

Dans un second mode de réalisation, la base de référence délivre un filtre temporel paramétré par une constante de temps. La comparaison consiste à appliquer le filtre au signal électrique, le signal représentatif de la qualité de la comparaison étant une différence d'un temps de montée du signal filtré avec un temps de montée de référence, la boucle d'asservissement tendant à annuler le signal représentatif de la qualité de la comparaison.

Le détecteur peut être polarisé au moyen d'un signal de polarisation et avantageusement le dispositif comprend une boucle d'asservissement du signal de polarisation en fonction d'un écart entre un premier paramètre courant et un premier paramètre nominal.

La boucle d'asservissement du signal de polarisation peut comprendre un multiplicateur de l'écart entre le premier paramètre courant et le premier paramètre nominal par une constante de gain et un additionneur ajoutant un résultat issu du multiplicateur à la valeur courante du signal de polarisation.

Une constante de temps de la boucle d'asservissement du signal de polarisation est avantageusement plus forte qu'une constante de temps de la boucle d'asservissement du premier paramètre de la base de référence.

L'invention sera mieux comprise et d'autres avantages apparaîtront à la lecture de la description détaillée d'un mode de réalisation donné à titre d'exemple, description illustrée par le dessin joint dans lequel :

la figure 1 représente un système d'imagerie par rayonnement X pour le contrôle de bagages ;
la figure 2 représente schématiquement un exemple de dispositif de spectrométrie mettant en œuvre l'invention et pouvant être implanté dans le système de la figure 1 ;
les figures 3a et 3b représentent des exemples de faisceau de courbes représentant l'amplitude en ordonnée d'un signal de sortie d'un soustracteur du dispositif ;
la figure 4 représente un exemple de faisceau de courbes de référence numérisées ;
la figure 5 représente schématiquement un autre exemple de dispositif de spectrométrie mettant en œuvre l'invention.

Par souci de clarté, les mêmes éléments porteront les mêmes repères dans les différentes figures.

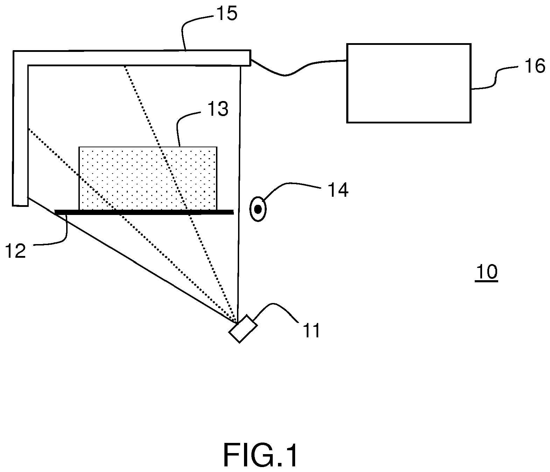

La figure 1 représente schématiquement un système d'imagerie 10 par rayonnement X pour le contrôle de bagages. Le système d'imagerie 10 comprend une source de rayons X 11, un tapis roulant 12 apte à transporter des bagages 13 dans la direction représentée par la flèche 14, un détecteur à semi-conducteur 15 et un dispositif de traitement 16 connecté au détecteur 15. Le détecteur 15 représenté sur la figure 1 est un détecteur linéaire en L. Il comprend des éléments sensibles au rayonnement X tels que des photodiodes ou des photoconducteurs disposés sur deux lignes perpendiculaires entre elles. Le détecteur 15 peut également être un détecteur à deux dimensions et comporter une matrice d'éléments sensibles. Lorsqu'un élément sensible du détecteur 15 est exposé à un photon X, il convertit ce photon X en un paquet de charges dont le nombre est proportionnel à l'énergie du photon. La source de rayons X 11 émet un flux de photons en direction du détecteur 15 au travers du tapis roulant 12. Le spectre du flux de rayons X reçu en l'absence d'objets est déterminé préalablement à l'analyse d'objets. Ainsi, par comparaison de ce spectre avec le spectre du flux de rayons X reçu en présence d'un objet à analyser, il est possible de déterminer le flux de rayons X absorbé par l'objet à analyser.

Il est bien entendu que l'invention peut être mise en œuvre dans toute forme de détecteurs de rayonnement de photons comme le rayonnement Gamma, et dans d'autres systèmes nécessitant une spectrométrie d'un rayonnement de photons, comme par exemple l'imagerie médicale.

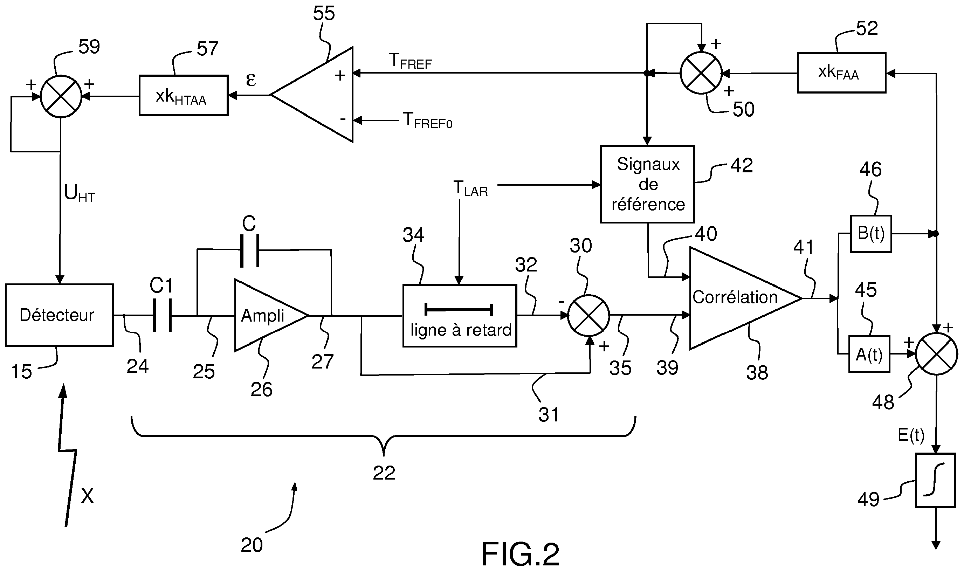

La figure 2 représente, schématiquement un exemple de dispositif de spectrométrie 20 selon l'invention et implanté dans le système 10.

Le dispositif 20 comprend un détecteur 15 et une chaîne de traitement 22 implantée dans le dispositif de traitement 16. Le détecteur 15 peut comprendre un ou plusieurs éléments sensibles. Le dispositif 20 peut soit comporter une seule chaîne de traitement 22 pour l'ensemble des éléments sensibles du détecteur 15, auquel cas les paquets de charges issus des différents éléments photosensibles sont traités successivement par la chaîne 22, soit comporter une chaîne de traitement associée à chaque élément photosensible, auquel cas les paquets de charges sont traités simultanément par les différentes chaînes 22. Pour ne pas surcharger la figure, on prendra l'exemple d'un détecteur 15 comprenant un seul élément sensible que l'on assimilera au détecteur 15 qui possède une sortie 24 sur laquelle les paquets de charges électriques sont disponibles pour être lues.

Le détecteur 15 délivre un signal électrique représentatif de l'énergie de chaque photon du rayonnement auquel le détecteur 15 est sensible. La chaîne de traitement a pour fonction de mettre en forme le signal issu du détecteur 15.

La chaîne de traitement 22 peut être réalisée sous forme d'un circuit intégré propre au traitement des charges issues du détecteur. Ce type de circuit intégré est par exemple connu dans la littérature anglo-saxonne sous le nom d'« ASIC » pour : « Application-Specific Integrated Circuit ». Il est également possible d'utiliser un circuit logique programmable notamment connu dans la littérature anglo-saxonne sous le nom de FPGA pour « Field-Programmable Gate Array » ou PLD pour « Programmable Logic Device ». On peut aussi mettre en œuvre un processeur de signal numérique connu dans la littérature anglo-saxonne sous le nom de DSP pour : « Digital Signal Processor ». De façon plus générale, tout circuit dédié au traitement du signal peut être mis en œuvre pour réaliser la chaîne de traitement 22.

Le détecteur 15 peut comprendre un cristal permettent la conversion des photons en charges, comme notamment des cristaux de tellurure de cadmium (CdTe) ou de tellurure de zinc-cadmium (CdZnTe ou CZT). Ces cristaux convertissent l'énergie des photons en électrons. Alternativement le détecteur 15 peut comprendre un scintillateur associé à une photodiode ou à un photomultiplicateur. Le scintillateur convertit le rayonnement de photons incident en un autre rayonnement de photon de longueur d'onde plus grande à laquelle la photodiode est sensible. On peut par exemple mettre en œuvre de scintillateurs rapides à base de lutécium, comme de l'oxyortho-silicate de lutécium connu sont l'abréviation « LSO » ou l'oxyortho-silicate de lutécium-yttrium connu sont l'abréviation « LYSO ».

Le photomultiplicateur peut être à base silicium comme par exemple ceux connus par l'abréviation SiPM pour ses initiales dans la littérature anglo-saxonne : « Silicon PhotoMultiplier » ou MPPC : « Multi-Pixel Photon Counter ».

La figure 2 représente un dispositif de spectrométrie dont le détecteur met en œuvre un cristal. Dans cette variante, la chaîne de traitement 22 comprend un amplificateur 26 de type intégrateur comprenant une entrée 25 et une sortie 27. L'entrée 25 est raccordée à la sortie 24 du détecteur 15, éventuellement par l'intermédiaire d'un condensateur de découplage C1. Un autre condensateur C est disposé entre l'entrée 25 et la sortie 27. Il est possible d'adjoindre une résistance en parallèle du condensateur C qui forme une contre réaction assurant la fonction intégrateur de l'amplificateur 26.

La chaîne de traitement 22 peut comprendre un soustracteur 30 associé à une ligne à retard 34. Une entrée positive 31 du soustracteur 30 est raccordée directement à la sortie 27 de l'amplificateur 26 et une entrée négative 32 soustracteur 30 est raccordée à la sortie 27 de l'amplificateur 26 par l'intermédiaire d'une ligne à retard 34. A la sortie 35 du soustracteur 30, on dispose d'un signal formé par la différence entre le signal issu de l'amplificateur et le même signal retardé par la ligne à retard. Il est possible d'insérer en amont d'une des entrées 31 et 32 du soustracteur un gain permettant d'équilibrer les niveaux des signaux reçus par le soustracteur 30, notamment au cas où la ligne à retard générerait un affaiblissement du signal. Les bornes négatives et positives du soustracteur 30 peuvent être inversées. La suite du traitement tiendra compte de cette inversion.

Selon l'invention, le dispositif 20 comprend un comparateur 38 à deux entrées 39 et 40 et une sortie 41. L'entrée 39 reçoit le signal de sortie du soustracteur 30 et l'entrée 40 est connectée à une base de référence 42 de formes de signaux. La base de référence 42 comprend plusieurs formes de signaux attendues en sortie du soustracteur 30. Les formes de signaux correspondent à différents temps de réponse du cristal du détecteur 15. En choisissant pour les formes de signaux contenus dans la base de référence 42, différents temps de réponse dans une plage attendue et en les répartissant avec un pas constant, il est possible de retrouver le niveau d'énergie réel du photon reçu par le détecteur 15 grâce à une proximité entre le temps de réponse réel et un des signaux de la base de référence 42.

Le comparateur 38 est configuré pour établir une corrélation entre un signal reçu du soustracteur 30 et un des signaux de la base de référence 42. La corrélation est une forme de comparaison réalisée par le comparateur 38.

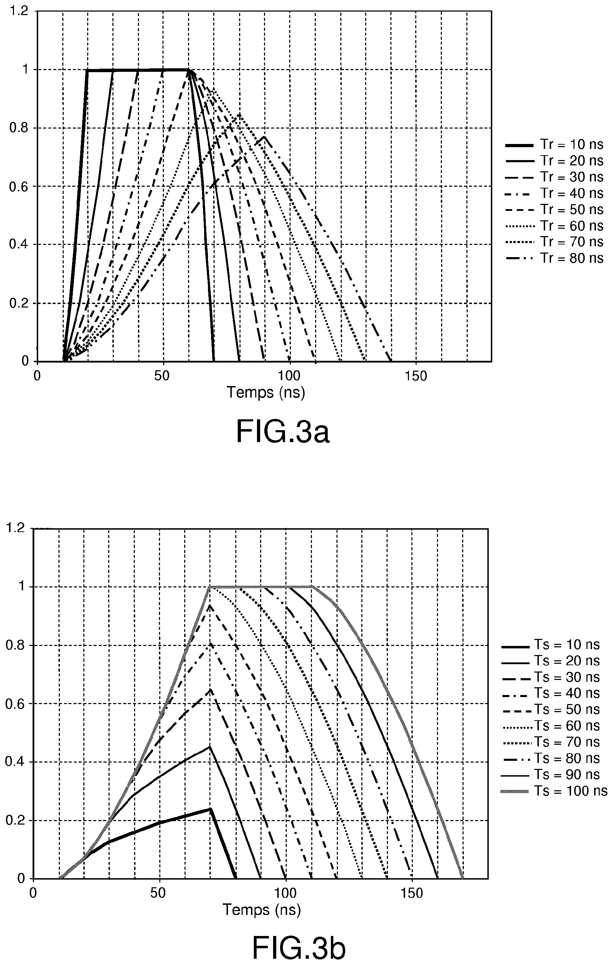

Les figures 3a et 3b représentent deux faisceaux de courbes représentant en ordonnée l'amplitude d'un signal $U_p(t)$ de sortie du soustracteur 30 en fonction du temps représenté en abscisse. Sur ces deux figures, l'amplitude a été normalisée à 1 et le temps est exprimé en nano secondes. Sur la figure 3a, la durée de la ligne à retard est fixée à 50 ns et chacune des courbes correspond à la durée d'un front de tension sortant de l'amplificateur 26. La première courbe correspond à un front de tension durant 10 ns et la dernière courbe correspond à un front de tension durant 80 ns.

Le front de tension est du à la détection d'un photon par le détecteur 15. La durée de ce front est fonction de la bande passante de l'amplificateur 26, ainsi que de la cinétique d'arrivée des charges à l'entrée de l'amplificateur 26. Cette cinétique dépend notamment des caractéristiques du détecteur 15, de sa stabilisation, de la température, de sa tension d'alimentation. La figure 3a illustre que si la durée du front de tension est supérieure à la durée de la ligne à retard appelée $T_{LAR}$, le signal sortant du soustracteur 30 ne peut atteindre son amplitude maximum : 1 sur la figure 3a.

De même, la figure 3b la durée du front est fixée à 60 ns et les différentes courbes représentent différentes valeurs de la durée de la ligne à retard 34. Le même constat qu'à partir de la figure 3a peut être fait à partir de la figure 3b, En choisissant la durée $T_{LAR}$ inférieure à la durée du front, l'amplitude maximale du signal n'est pas atteinte.

Néanmoins, en stockant dans la base de référence 42 différentes formes de signaux correspondant à différentes durées de front de tension et éventuellement à différentes durées $T_{LAR}$ de ligne à retard, il est possible de comparer le signal issu du soustracteur 30 avec les signaux de référence pour retrouver la meilleure corrélation et ainsi remonter à l'énergie du photon reçu par le détecteur 15. Cette comparaison peut donner un bon résultat même si la durée du front de tension est supérieure à la durée de la ligne à retard.

Les formes de référence peuvent être des formes théoriques, par exemple calculées à partir de modélisations de fonctionnement du détecteur 15 et des différents composants de la chaîne 22. Il est également possible de définir les formes de référence de façon empirique à l'aide de mesures réelles faites sur le dispositif 20.

Les signaux de références stockées dans la base de référence 42 peuvent être numérisés par pas, par exemple par pas de 10 ns. Un échantillonnage du signal $U_p(t)$ issu du soustracteur 30 est alors effectué au même pas. La comparaison consiste alors à effectuer à chaque période d'échantillonnage un calcul statistique de corrélation entre les échantillons successifs du signal issu du soustracteur 30 et une des formes de référence stockées dans la base 42.

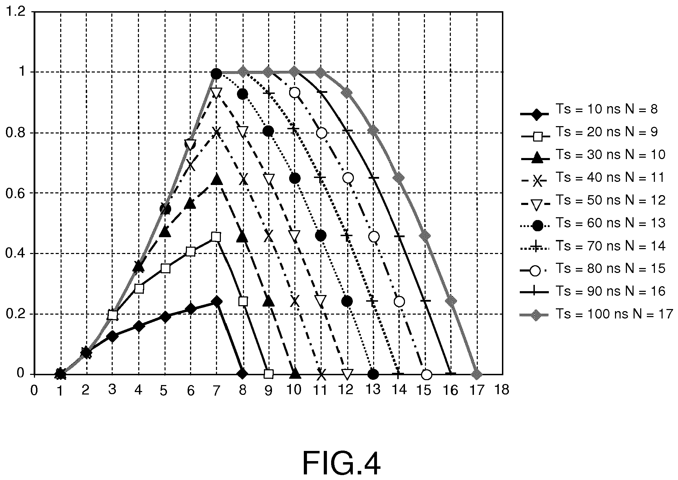

La figure 4 représente un exemple de faisceau de courbes de références numérisées. Ce faisceau de courbes est semblable à celui de la figure 3b. La numérisation a été faite avec un pas de 10 ns. La numérisation s'étend sur N pas, 17 pas dans cet exemple.

Le calcul de corrélation entre le signal issu du soustracteur $U_p(t)$ et les formes de référence peut par exemple s'apparenter à une régression linéaire calculée à chaque période d'échantillonnage. Pour la formes de référence F(n) retenue, n représentant le pas d'échantillonnage de la forme de référence et variant de 1 à N, on calcule les deux valeurs constantes suivantes :

- Une moyenne de la forme de référence :

$$\overline{F} = \frac{1}{N} \sum_{n=1}^{N} F(n)$$

- Une variance de la forme de référence :

$$S_F^2 = \frac{1}{N} \sum_{n=1}^{N} \left( F(n) - \overline{F} \right)^2$$

Le calcul de la moyenne $\overline{F}$ et de la variance $S_F^2$ peut être fait dans la base de référence 42.

Pour traiter le signal impulsionnel $U_p(t)$ issu du soustracteur 30, on effectue les calculs suivants en parallèle à chaque valeur du temps t, multiple entier de la période d'échantillonnage $T_{ECH}$ qui est dans l'exemple représentée de 10 ns :

- Moyenne à l'instant t de $U_p$ :

$$\overline{U_p}(t) = \frac{1}{N} \sum_{n=1}^{N} U_p(t - (N-n)T_{ECH})$$

- Moyenne à l'instant t du carré de $U_p$ :

$$\overline{U_p^2}(t) = \frac{1}{N} \sum_{n=1}^{N} \left( U_p(t - (N-n)T_{ECH}) \right)^2$$

- Variance à l'instant t de $U_p$ :

$$S_{U_p}^2(t) = \overline{U_p^2}(t) - \left( \overline{U_p}(t) \right)^2$$

- Pour chacune des formes de référence : Moyenne à l'instant t du produit $F.U_p$ :

$$\overline{F.U_p}(t) = \frac{1}{N} \sum_{n=1}^{N} F(n).U_p(t - (N-n)T_{ECH})$$

- Covariance à l'instant t de F et $U_p$ :

$$S_{FU_p}(t) = \overline{F.U_p}(t) - \overline{F}.\overline{U_p}(t)$$

On en déduit pour chaque temps t, multiple de $T_{ECH}$, un coefficient de corrélation R(t) fonction du temps entre $U_p(t)$ et F(t) :

$$R(t) = \frac{S_{FU_p}(t) . \left| S_{FU_p}(t) \right|}{S_F^2 . S_{U_p}^2(t)}$$

L'analyse des variations de R(t) en fonction du temps t permet de détecter l'arrivée d'un front, donc d'un photon. R(t) (sans dimension) est à tout moment compris entre -1 et +1. On considère qu'un front est détecté chaque fois que R(t) présente un maximum relatif (en fonction de t) supérieur à un seuil donné RS qui est par exemple égale à 0,75. On retient ensuite la courbe de référence F ayant la plus grande valeur de R(t). En pratique cette valeur est proche de 1.

Les moyenne, variance et covariance ainsi que le coefficient de corrélation faisant intervenir le signal Up peuvent être réalisées dans le comparateur 38.

On calcule ensuite les trois paramètres suivants pour chaque temps t, multiple de $T_{ECH}$ :

- A(t) représente la variation de l'amplitude de $U_p(t)$ :

$$A(t) = \frac{S_{FU_p}(t)}{S_F^2}$$

- B(t) représente l'ordonnée à l'origine de l'amplitude :

$$B(t) = \overline{U_p}(t) - A(t).\overline{F}$$

- E(t) représente l'énergie du photon :

$$E(t) = A(t) + B(t)$$

L'amplitude du front est alors égale à E(t), t étant l'instant du maximum relatif de R(t). Sur la figure 2, on a représenté les principaux blocs fonctionnels permettant de réaliser ces calculs. Le calcul de A(t) est réalisé dans un bloc 45 et le calcul de B(t) est réalisé dans un bloc 46. Les blocs 45 et 46 utilisent l'information délivrée par le comparateur 38 à sa sortie 41. Un sommateur 48 reçoit les sorties des blocs 45 et 46 et calcule E(t). L'énergie d'un photon détecté par le détecteur 15 et représentée par la valeur E(t) est déterminée sans itération de façon linéaire au travers de la chaîne de traitement 22 et du comparateur 38 associé aux blocs 45 et 46.

Un intégrateur 49 reçoit, pour chaque photon détecté, la valeur E(t). L'intégrateur 49 intègre dans un histogramme toutes les valeurs de E(t) pour obtenir un spectre de l'énergie des photons reçus.

Ces calculs permettent de quantifier correctement l'amplitude des fronts, donc l'énergie des photons incidents, même si la durée $T_{LAR}$ de la ligne à retard 34 est inférieure à la durée de front $T_{FREF}$ retenue pour les formes de référence F.

De plus les calculs tiennent compte de la totalité de l'impulsion Up(t), au lieu d'une simple détection de valeur maximum de ce signal comme dans l'art antérieur, le rapport signal/bruit est encore amélioré.

Il est possible de simplifier les calculs, notamment afin de simplifier la chaîne de traitement 22. Pour ce faire, il est possible de chercher directement les maximums relatifs de E(t) en fonction de t. Chaque maximum correspond à une impulsion détectée, dont l'amplitude de front est donnée par la valeur de ce maximum. Ceci permet d'éviter d'avoir à faire les calculs de R(t), et de $\overline{U_p^2}(t)$ et de $S_{U_p}^2(t)$.

On peut éventuellement simplifier encore les formules par un calcul approximatif en supposant que B(t) = 0 a priori. Le calcul est plus simple mais donne de moins bons résultats.

La corrélation permettant de reconnaitre le signal de référence correspondant à l'énergie du photon reçu par le détecteur 15 est d'autant mieux réalisée que le début du front issu de l'amplificateur 26 correspond bien à une valeur nulle de l'amplitude. Généralement, l'amplificateur 26 de charges ne transmet pas la composante continue du signal formé par le détecteur 15, notamment du fait de la présence du condensateur de découplage C1, utile pour s'affranchir du courant de fuite du détecteur 15. En conséquence, l'amplitude nulle dans les courbes telles que représentées sur les figures 3a et 3b n'est pas connu. Il est donc nécessaire de faire une correction d'offset de l'amplitude souvent appelée, correction de ligne de base. Cette correction peut se faire par exemple en faisant une moyenne, éventuellement glissante, sur des valeurs successives du signal entre deux impulsions. Une compensation de la fréquence de coupure de l'amplificateur de charge peut aussi s'avérer nécessaire. Cette fréquence de coupure est due au condensateur C et à sa résistance série présents dans la contre réaction de l'amplificateur 26.

Il subsiste une erreur de mesure si la durée $T_{FREF}$ de front retenue pour la forme de référence avec laquelle les calculs ont été effectués diffère de la durée $T_{FSIG}$ de front en sortie de l'amplificateur 26. Cette erreur est notamment importante lorsque $T_{LAR} < T_{FREF}$. Plus précisément, si la durée $T_{FSIG}$ de front en sortie de l'amplificateur 26 varie au cours du temps, notamment avec la température, la mesure perd en stabilité. Avantageusement pour réduire cette erreur, la chaîne de traitement 22 est configurée pour que la base de référence 42 génère plusieurs formes de signaux, chacune correspondant à une durée de front $T_{FSIG}$ du signal délivré par l'amplificateur 26 en réponse à la réception d'un photon par le détecteur 15.

La durée $T_{FREF}$ représente un premier paramètre de la base de référence 42 et une seule comparaison est effectuée par le comparateur 38 entre le signal électrique issu du détecteur 15 mis en forme par la chaîne de traitement 22 et une des formes de référence formant le signal de référence. Alternativement, il est possible de configurer le comparateur 38 pour réaliser plusieurs comparaisons entre le signal électrique issu du détecteur 15 et plusieurs formes de référence. Il est entendu que la ou les différentes formes de référence comparées pour déterminer l'énergie d'un photon courant ont été définies antérieurement à la comparaison courante, à l'aide de valeurs du facteur de qualité B(t) établies par le comparateur 38 pour des photons précédant le photon courant.

En complément, la ligne à retard 34 peut aussi être paramétrable au moyen de sa durée de retard $T_{LAR}$. Avantageusement, la base de référence 42 est également paramétrable au moyen d'un second paramètre formé par sa durée de retard $T_{LAR}$. L'accès à la forme de référence retenue pour la corrélation se fait alors de façon matricielle en fonction de deux paramètres $T_{FREF}$ et $T_{LAR}$.

Il a été constaté que la valeur du paramètre B(t) représentant l'ordonnée à l'origine du signal $U_p(t)$, est représentative de l'adéquation entre la durée $T_{FSIG}$ de front en sortie de l'amplificateur 26 et durée $T_{FREF}$ de front des formes de référence. Autrement dit, le paramètre B(t) représente un facteur de qualité de la corrélation. Plus précisément, si la valeur de B(t) à l'instant t de détection d'une impulsion est positive, la durée de front $T_{FREF}$ de la forme de référence est plus courte que la durée de front $T_{FSIG}$ du signal issu de l'amplificateur 26. Autrement dit, si B(t)>0, alors $T_{FREF} < T_{FSIG}$.

A l'inverse, si la valeur de B(t) à l'instant t de détection d'une impulsion est négative, la durée de front $T_{FREF}$ de la forme de référence est plus longue que la durée de front $T_{FSIG}$ du signal issu de l'amplificateur 26. Autrement dit, si B(t) <0, alors $T_{FREF} > T_{FSIG}$.

Lorsqu'un front est détecté, plus précisément à l'aide des calculs proposés plus haut, lorsque R(t) présente un maximum relatif en fonction de t supérieur à au seuil donné RS, on corrige la durée de front $T_{FREF}$ de la forme de référence au moyen d'un additionneur 50. Plus précisément, à la valeur courante de $T_{FREF}$, on ajoute la valeur algébrique de B(t) affectée d'un coefficient $k_{FAA}$ formant une constante de gain positive. Autrement dit :

$$T_{FREF} = T_{FREF} + k_{FAA} x B(t)$$

Un multiplicateur 52 permet de multiplier le coefficient $k_{FAA}$ par B(t). De façon plus générale, le dispositif 20 comprend une boucle d'asservissement de la durée de front de référence $T_{FREF}$ à la durée de front $T_{FSIG}$. Dans l'exemple représenté, la boucle d'asservissement comprend le bloc 46 déterminant B(t) formant un signal d'erreur de la boucle d'asservissement, le multiplicateur 52 appliquant à B(t) le gain $k_{FAA}$ et l'additionneur 50 corrigeant la durée de front de référence $T_{FREF}$ avec B(t) affecté de son gain $K_{FAA}$.

La boucle d'asservissement est utilisée pour affiner la quantification de l'énergie E(t) des photons reçus ultérieurement par le détecteur 15. Des essais en interne ont montré que la quantification de l'énergie d'un photon devient optimum après de l'ordre de quelques centaines à plusieurs milliers de photons reçus, dont le dispositif a déjà déterminé l'énergie de façon moins précise. Pour un photon donné, la détermination de son énergie n'utilise pas la boucle d'asservissement.

Le coefficient $k_{FAA}$ est à ajuster en fonction d'un compromis stabilité/rapidité. La rapidité de convergence de $T_{FREF}$ vers $T_{FSIG}$ doit être proportionnelle au flux de photons reçu. Néanmoins une rapidité trop importante risque de rendre instable la valeur de $T_{FREF}$. Au démarrage, $T_{FREF}$ sera initialisé à une valeur typique. A chaque fois que sa valeur change (au moins de façon significative), on recalcule les formes de référence F(n), ainsi que $\overline{F}$ et $S_F^2$. Il est possible de conserver les formes de références si la valeur de $T_{FREF}$ ne change pas de façon significative. Autrement dit, tant que la valeur de $T_{FREF}$ ne dépasse pas un seuil prédéterminé autour de sa valeur courante, les formes de références restent inchangées.

Il est possible d'affiner la modification de la valeur courante de $T_{FREF}$, en appliquant une correction de type proportionnelle, intégrale et/ou dérivée. Les coefficients de ce type de correction sont déterminés afin d'améliorer le compromis stabilité/rapidité.

Lorsque la durée du front de forme de référence $T_{FREF}$ aura convergé, elle sera conforme à la durée moyenne de la durée de front de signal $T_{FSIG}$. Si les variations de $T_{FSIG}$ sont plus lentes que la rapidité de convergence de $T_{FREF}$, définie par le coefficient $k_{FAA}$, alors $T_{FREF}$ va suivre à tout moment les variations de $T_{FSIG}$, et la quantification d'énergie E(t) restera précise.

Comme on l'a évoqué plus haut, le détecteur 15 peut comprendre plusieurs éléments sensibles et la chaîne de traitement 22 peut être commune à différents éléments sensibles du détecteur 15. Néanmoins lorsqu'on a plusieurs éléments sensibles (ou pixels), la valeur de $T_{FREF}$ peut être particulière à chaque élément sensible, ou bien commune à plusieurs éléments sensibles. Si les caractéristiques des différents éléments sensibles sont suffisamment proches, il est possible de mutualiser une même valeur de $T_{FREF}$ pour les différents éléments sensibles. Cela permet une convergence plus rapide par mutualisation des photons détectés par les différents éléments sensibles.

Avantageusement, on définit une gamme autorisée de valeurs de E(t), avec un minimum au-dessus du bruit de fond, et éventuellement aussi un maximum pour éviter de prendre en compte des fausses impulsions provenant d'empilements de photons souvent appelés coïncidences et reçus quasi simultanément par le détecteur 15.

L'adaptation de la durée de front de référence $T_{FREF}$ permet d'avoir, tant qu'on a un flux de photons, une auto-adaptation permanente de la durée du front de la forme de référence pour qu'elle corresponde au mieux à celle du front du signal réel. On obtient ainsi une fidélité optimale de la quantification de l'amplitude du front et donc de la mesure de l'énergie des photons incidents.

L'adaptation de la durée de front de référence $T_{FREF}$ permet de stabiliser les mesures réalisées par le dispositif lorsque le temps de réponse du détecteur 15 et de la chaîne de traitement 22 évolue. Il est possible d'améliorer encore les mesures en tendant à stabiliser le temps de réponse lui-même.

Pour son fonctionnement, un signal de polarisation est appliqué au détecteur 15. Dans le cas d'un cristal semi-conducteur, le signal de polarisation est une tension pouvant typiquement aller de quelques centaines de volts à 2 kilovolts. Plus précisément, un photon reçu génère des charges dans le cristal et la tension de polarisation permet le transit des charges générées vers des électrodes. La tension de polarisation est appelée $U_{HT}$ ou haute tension. En pratique, la durée de front de signal $T_{FSIG}$ évolue en fonction du champ électrique appliqué au cristal du fait de la présence de la haute tension $U_{HT}$. Plus précisément, la durée de front de signal $T_{FSIG}$ dépend principalement du champ électrique dans le cristal. A tension de polarisation constante, on constate des variations de champ électrique, notamment au démarrage du dispositif.

Pour maintenir la durée de front de signal $T_{FSIG}$ aussi proche que possible d'une durée de référence nominale $T_{FREFO}$, Il est possible d'ajuster la haute tension $U_{HT}$. Autrement dit, la chaîne de traitement 22 comprend une seconde boucle d'asservissement de la haute tension $U_{HT}$ en fonction d'un écart entre la durée front de référence $T_{FREF}$ et la durée front de référence nominale $T_{FREFO}$.

Antérieurement, on a tenté d'agir sur la haute tension $U_{HT}$. Mais uniquement pour tenter d'accélérer la stabilisation du détecteur, pas pour maintenir constante la durée de front de signal $T_{FSIG}$.

Cette seconde boucle d'asservissement de la haute tension $U_{HT}$ s'ajoute à la première boucle d'asservissement des signaux de référence décrite plus haut. Non seulement, on détermine l'amplitude du signal par corrélation à un signal de référence choisi en fonction de la durée de front réelle $T_{FSIG}$ et en complément, on agit sur le détecteur lui-même pour maintenir de la durée de front réelle $T_{FSIG}$ aussi constante que possible.

Alternativement, il est possible de mettre en œuvre la seconde boucle d'asservissement sans la première boucle. Plus précisément, le signal de polarisation peut être asservi sur une variable représentative de la durée de front réelle $T_{FSIG}$. La variable peut être une mesure du temps de montée du signal issu de la chaîne de traitement 22. Il est également possible de mettre en œuvre la base de référence 42 avec un seul signal et d'utiliser le facteur de qualité de la corrélation, en l'occurrence le paramètre B(t) pour asservir la haute de tension $U_{TH}$.

La seconde boucle d'asservissement, comprend un comparateur 55 de la durée front de référence $T_{FREF}$ et de la durée front de référence nominale $T_{FREFO}$. A la sortie du comparateur 55, on dispose d'un signal d'erreur $\varepsilon$ de la seconde boucle d'asservissement. Un multiplicateur 57 permet de multiplier le signal d'erreur $\varepsilon$ avec un coefficient d'asservissement $k_{HTAA}$. La tension $U_{HT}$ est corrigée au moyen d'un additionneur 59 ajoutant à une valeur courante de la tension $U_{HT}$ un correctif égal au résultat de la multiplication. Plus précisément, à la valeur courante de $U_{HT}$, on ajoute le signal d'erreur $\varepsilon$ affecté du coefficient $k_{HTAA}$. Autrement dit :

$$U_{HT} = U_{HT} + k_{HTAA} \cdot (T_{FREF} - T_{FREFO})$$

En pratique, $U_{HT}$ peut représenter une valeur de pilotage proportionnelle à la tension de polarisation réellement appliquée au détecteur. Il est possible d'affiner la modification de la valeur courante de $U_{HT}$, en appliquant une correction $k_{HTAA}$ de type proportionnelle, intégrale et/ou dérivée. Les coefficients de ce type de correction sont déterminés afin d'améliorer le compromis stabilité/rapidité.

La seconde boucle d'asservissement permet de conserver une bonne quantification des énergies en toute circonstance, même pendant les phases de stabilisation du détecteur ou de stabilisation de la température. La seule limitation est la gamme de tension $U_{HT}$ acceptable pour le bon fonctionnement du détecteur 15.

Le choix de la valeur nominale cible $T_{FREFO}$ peut se faire de façon définitive en fonction du détecteur 15 choisi. Alternativement, pour améliorer encore la performance du dispositif par rapport aux caractéristiques physiques du détecteur 15, on peut aussi utiliser une valeur cible $T_{FREFO}$ qui dépend par exemple de la température ambiante, de la haute tension $U_{HT}$ appliquée, ou d'autres paramètres physiques liés au détecteur 15.

Les deux boucles d'asservissement peuvent interférer l'une avec l'autre et entrainer une instabilité des mesures d'énergie E(t). Avantageusement, une constante de temps de la seconde boucle d'asservissement, est plus forte que celle de la première boucle. Autrement dit, à partir d'une valeur nominale cible $T_{FREFO}$ de durée de front de forme de référence, et on va ajuster progressivement la valeur absolue de tension $U_{HT}$, jusqu'à converger de manière à ce que $T_{FREF} - T_{FREFO}$ soit nul en moyenne sur une longue période de temps. La modification de séries de formes de référence réalisée au moyen de la première boucle d'asservissement possède quant à elle un temps de réaction plus faible.

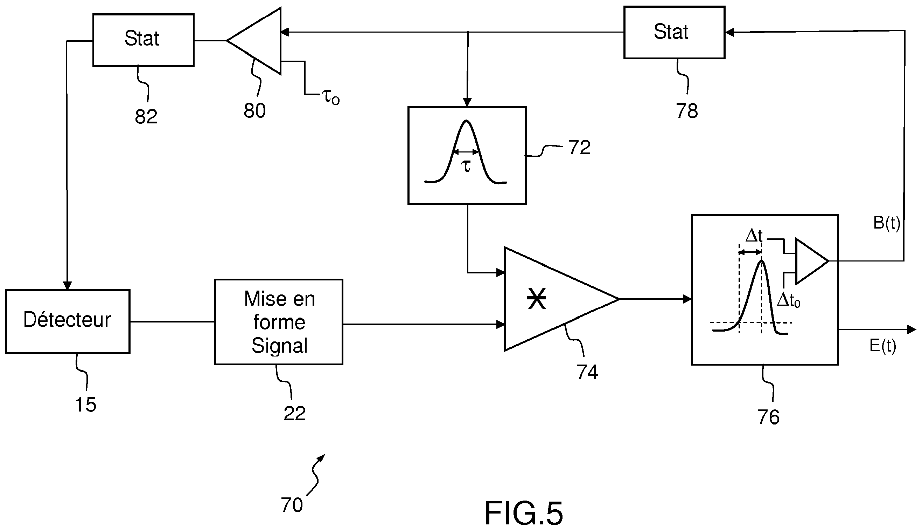

La figure 5 représente, schématiquement un autre exemple de dispositif de spectrométrie 70 selon l'invention et pouvant être implanté dans le système 10. Dans le dispositif 70, on retrouve un détecteur 15 et la chaîne de traitement 22 associée. La base de référence porte ici le repère 72. Il s'agit d'un filtre temporel, par exemple un filtre gaussien dont la constante de temps $\tau$ est paramétrable. Le comparateur est ici un opérateur de convolution 74 permettant d'appliquer le filtre au signal issu de la chaîne de traitement 22. Autrement dit, la comparaison réalisée par le comparateur consiste à appliquer le filtre au signal électrique issu du détecteur 15. La convolution est une forme de comparaison. Le bloc 76 correspond aux blocs 45 et 46 décrits précédemment et permettant de calculer le facteur de qualité B(t) et l'énergie E(t). Le facteur de qualité B(t) est par exemple un écart entre le temps de montée du signal filtré issu du comparateur 74 et un temps de montée de référence. L'énergie E(t) est par exemple l'amplitude du signal filtré. Dans la première boucle d'asservissement un bloc 78 correspondant au multiplicateur 52 et à l'additionneur 50 permet d'adapter la constante de temps $\tau$ de la base de référence 72 pour obtenir la valeur optimale du facteur de qualité, en l'occurrence, une valeur nulle de B(t). Ici également un coefficient $k_{FAA}$ est à ajuster en fonction d'un compromis stabilité/rapidité. Comme dans le premier exemple, il est possible d'affiner la valeur de la constante de temps $\tau$ en appliquant une correction de type proportionnelle, intégrale et/ou dérivée. Les coefficients de ce type de correction sont déterminés afin d'améliorer le compromis stabilité/rapidité.

Comme dans le premier exemple, une seconde boucle d'asservissement peut agir sur un signal de polarisation du détecteur 15 de façon à maintenir la constante de temps $\tau$ aussi proche que possible d'une constante de temps de référence $\tau_0$. Un comparateur 80 correspond au comparateur 55 et un bloc 82 reprend les fonctions du multiplicateur 57 et de l'additionneur 59.

## Revendications

1.  Dispositif de spectrométrie d'un rayonnement de photons, le dispositif (20) comprenant :

    • un détecteur (15) configuré pour recevoir le rayonnement et pour délivrer sur une sortie (24) un signal électrique fonction de l'énergie de chaque photon du rayonnement (X) reçu,
    • une base de référence (42) paramétrable au moyen d'un premier paramètre,
    • un comparateur (38) à deux entrées (39, 40) et deux sorties (41), le comparateur (38) recevant sur sa première entrée (39) le signal électrique fonction de l'énergie d'un photon courant, et sur sa seconde entrée (40) un signal de référence délivré par la base de référence (42), le comparateur (38) étant configuré pour établir une comparaison entre le signal électrique et le signal de référence, le comparateur (38) délivrant sur sa première sortie un signal (E(t)) représentatif de l'énergie de chaque photon du rayonnement et sur sa seconde sortie un facteur de qualité (B(t)) de la comparaison, **caractérisé en ce que** le dispositif comprend en outre
    • une boucle d'asservissement (46, 50, 52) permettant d'adapter le premier paramètre de la base de référence (42) de façon à rendre optimum le facteur de qualité (B(t)), la boucle d'asservissement (46, 50, 52) n'intervenant que pour affiner la détermination du signal (E(t)) représentatif de l'énergie de photons du rayonnement (X) ultérieurs au photon courant en adaptant le premier paramètre de la base de référence (42), la boucle d'asservissement (46, 50, 52) n'intervenant pas pour la détermination de l'énergie du photon courant.

2.  Dispositif selon la revendication 1, **caractérisé en ce que** le comparateur (38) est configuré pour établir une comparaison entre le signal électrique fonction de l'énergie d'un photon courant et le signal de référence sélectionné dans la base en fonction d'une valeur du premier paramètre définie à partir de valeurs du facteur de qualité (B(t)) délivrées par le comparateur (38) recevant sur sa première entrée le signal électrique fonction de l'énergie de photons précédant le photon courant, et donner en sortie un signal (E(t)) représentatif de l'énergie du photon courant.

3.  Dispositif selon l'une des revendications précédentes, **caractérisé en ce qu'**il comprend en outre :

    • un amplificateur (26) de type intégrateur comprenant une entrée (25) et une sortie (27), l'entrée (25) de l'amplificateur (26) étant raccordée à la sortie (24) du détecteur (15),

    et **en ce que** la base de référence (42) est configurée pour générer plusieurs formes de signaux, chacune correspondant à une durée de front ($T_{FSIG}$) d'un signal délivré par l'amplificateur (26) en réponse à la réception d'un photon par le détecteur (15).

4.  Dispositif selon l'une des revendications 2 ou 3, **caractérisé en ce que** la base de référence (42) est configurée pour associer à chaque forme de signaux une durée de front de référence ($T_{FREF}$) formant le premier paramètre de la base de référence (42), la boucle d'asservissement (46, 50, 52) asservissant la durée de front de référence ($T_{FREF}$) à la durée de front ($T_{FSIG}$) d'un signal délivré par l'amplificateur (26) en réponse à la réception d'un photon par le détecteur (15).

5.  Dispositif selon la revendication 4, **caractérisé en ce que** le signal (B(t)) représentatif de la qualité de la comparaison est représentatif d'un écart entre la durée de front ($T_{FSIG}$) d'un signal délivré par l'amplificateur (26) et la durée de front de référence ($T_{FREF}$) associée à la forme de signaux reçue par le comparateur (38) et **en ce que** la boucle d'asservissement de la durée de front de référence ($T_{FREF}$) à la durée de front ($T_{FSIG}$) d'un signal délivré par l'amplificateur (26) est configurée pour modifier la durée front de référence ($T_{FREF}$) afin de changer de forme de référence en fonction de la valeur du signal (B(t)) représentatif de la qualité de la comparaison.

6.  Dispositif selon la revendication 5, **caractérisé en ce que** la boucle d'asservissement de la durée de front de référence ($T_{FREF}$) à la durée de front ($T_{FSIG}$) d'un signal délivré par l'amplificateur (26) comprend un multiplicateur (52) de la valeur représentative (B(t)) par une constante de gain ($k_{FAA}$) et un additionneur (50) ajoutant un résultat issu du multiplicateur (52) à la valeur courante de la durée front de référence ($T_{FREF}$).

7. Dispositif selon l'une des revendications 2 à 6, **caractérisé en ce qu'**il comprend en outre :

  • un soustracteur (30) à deux entrées (31, 32) et une sortie (35), connecté à une première de ses entrées (31) à la sortie de l'amplificateur (26), la sortie (35) du soustracteur (30) délivrant le signal électrique,
  • une ligne à retard (34) connectée entre la sortie (27) de l'amplificateur (26) et une seconde des deux entrées (32) du soustracteur (30),

  et **en ce que** la ligne à retard (34) est paramétrable au moyen de sa durée de retard ($T_{LAR}$) et **en ce que** la base de référence (42) est paramétrable au moyen d'un second paramètre formé par la durée de retard ($T_{LAR}$).

8. Dispositif selon la revendication 1, **caractérisé en ce que** la base de référence délivre un filtre temporel paramétré par une constante de temps, **en ce que** la comparaison consiste à appliquer le filtre au signal électrique, le signal (B(t)) représentatif de la qualité de la comparaison étant une différence d'un temps de montée du signal filtré avec un temps de montée de référence, la boucle d'asservissement tendant à annuler le signal (B(t)) représentatif de la qualité de la comparaison.

9. Dispositif selon l'une des revendications précédentes, **caractérisé en ce que** le détecteur (15) est polarisé au moyen d'un signal de polarisation ($U_{HT}$) et **en ce que** le dispositif comprend une boucle d'asservissement (55, 57, 59) du signal de polarisation ($U_{HT}$) en fonction d'un écart entre un premier paramètre courant ($T_{FREF}$) et un premier paramètre nominal ($T_{FREFO}$).

10. Dispositif selon la revendication 9, **caractérisé en ce que** la boucle d'asservissement du signal de polarisation ($U_{HT}$) comprend un multiplicateur (57) de l'écart entre le premier paramètre courant ($T_{FREF}$) et le premier paramètre nominal ($T_{FREFO}$) par une constante de gain ($k_{HTAA}$) et un additionneur (59) ajoutant un résultat issu du multiplicateur (57) à la valeur courante du signal de polarisation ($U_{HT}$).

11. Dispositif selon l'une quelconque des revendications 9 ou 10, **caractérisé en ce qu'**une constante de temps de la boucle d'asservissement (55, 57, 59) du signal de polarisation ($U_{HT}$) est plus forte qu'une constante de temps de la boucle d'asservissement (46, 50, 52) du premier paramètre ($T_{FREF}$) de la base de référence (42).

**Patentansprüche**

1. Photonenstrahlungs-Spektrometrievorrichtung, wobei die Vorrichtung (20) Folgendes umfasst:

  • einen Detektor (15), konfiguriert zum Empfangen der Strahlung und zum Ausgeben, an einem Ausgang (24), eines elektrischen Signals in Abhängigkeit von der Energie jedes Photons der empfangenen Strahlung (X),
  • eine Referenzbasis (42), die anhand eines ersten Parameters parametrisiert werden kann,
  • einen Komparator (38) mit zwei Eingängen (39, 40) und zwei Ausgängen (41), wobei der Komparator (38) an seinem ersten Eingang (39) das von der Energie eines aktuellen Photons abhängige elektrische Signal und an seinem zweiten Eingang (40) ein von der Referenzbasis (42) geliefertes Referenzsignal empfängt, wobei der Komparator (38) zum Anstellen eines Vergleichs zwischen dem elektrischen Signal und dem Referenzsignal konfiguriert ist, wobei der Komparator (38) an seinem ersten Ausgang ein Signal (E(t)), das für die Energie jedes Photons der Strahlung repräsentativ ist, und an seinem zweiten Ausgang einen Qualitätsfaktor (B(t)) des Vergleichs liefert, **dadurch gekennzeichnet, dass** die Vorrichtung ferner Folgendes umfasst:
  • einen Regelkreis (46, 50, 52) zur Anpassung des ersten Parameters der Referenzbasis (42), um den Qualitätsfaktor (B(t)) optimal zu machen, wobei der Regelkreis (46, 50, 52) nur eingreift, um die Bestimmung des Signals (E(t)), das für die Photonenenergie der Strahlung (X) nach dem aktuellen Photon repräsentativ ist, durch Anpassen des ersten Parameters der Referenzbasis (42) zu verfeinern, wobei der Regelkreis (46, 50, 52) nicht für die Bestimmung der Energie des aktuellen Photons eingreift.

2. Vorrichtung nach Anspruch 1, **dadurch gekennzeichnet, dass** der Komparator (38) zum Anstellen eines Vergleichs zwischen dem von der Energie eines aktuellen Photons abhängigen elektrischen Signal und dem Referenzsignal, ausgewählt in der Basis in Abhängigkeit von einem Wert des ersten Parameters, definiert auf der Basis von Werten des Qualitätsfaktors (B(t)), die vom Komparator (38) geliefert werden, der an seinem ersten Eingang das von der Energie von Photonen vor dem aktuellen Photon abhängige elektrische Signal empfängt, und zum Ausgeben eines Signals (E(t)) konfiguriert ist, das für die Energie des aktuellen Photons repräsentativ ist.

3. Vorrichtung nach einem der vorherigen Ansprüche, **dadurch gekennzeichnet, dass** sie ferner Folgendes umfasst:

   • einen Verstärker (26) des Integratortyps, der einen Eingang (25) und einen Ausgang (27) umfasst, wobei der Eingang (25) des Verstärkers (26) mit dem Ausgang (24) des Sensors (15) verbunden ist,

   und dadurch, dass die Referenzbasis (42) zum Erzeugen mehrerer Signalformen konfiguriert ist, die jeweils einer Flankendauer ($T_{FSIG}$) eines Signals entsprechen, das vom Verstärker (26) als Reaktion auf den Empfang eines Photons durch den Detektor (15) geliefert wird.

4. Vorrichtung nach Anspruch 2 oder 3, **dadurch gekennzeichnet, dass** die Referenzbasis (42) zum Assoziieren einer Referenzflankendauer ($T_{FREF}$), die den ersten Parameter der Referenzbasis (42) bildet, mit jeder Signalform konfiguriert ist, wobei der Regelkreis (46, 50, 52) die Referenzflankendauer ($T_{FREF}$) auf die Flankendauer ($T_{FSIG}$) eines Signals einregelt, das vom Verstärker (26) als Reaktion auf den Empfang eines Photons durch den Detektor (15) geliefert wird.

5. Vorrichtung nach Anspruch 4, **dadurch gekennzeichnet, dass** das für die Qualität des Vergleichs repräsentative Signal (B(t)) für eine Differenz zwischen der Flankendauer ($T_{FSIG}$) eines vom Verstärker (26) gelieferten Signals und der Referenzflankendauer ($T_{FREF}$) repräsentativ ist, die mit der vom Komparator (38) empfangenen Signalform assoziiert ist, und dadurch, dass der Regelkreis für die Referenzflankendauer ($T_{FREF}$) auf die Flankendauer ($T_{FSIG}$) eines vom Verstärker (26) gelieferten Signals zum Modifizieren der Bezugsflankendauer ($T_{FREF}$) konfiguriert ist, um die Referenzform in Abhängigkeit vom Wert des für die Qualität des Vergleichs repräsentativen Signals (B(t)) zu ändern.

6. Vorrichtung nach Anspruch 5, **dadurch gekennzeichnet, dass** der Regelkreis für die Referenzflankendauer ($T_{FREF}$) auf die Flankendauer ($T_{FSIG}$) eines vom Verstärker (26) gelieferten Signals einen Multiplikator (52) zum Multiplizieren des repräsentativen Wertes (B(t)) mit einer Verstärkungskonstanten ($k_{FAA}$) und einen Addierer (50) zum Addieren eines Ergebnisses vom Multiplikator (52) zum aktuellen Wert der Referenzflankendauer ($T_{FREF}$) umfasst.

7. Vorrichtung nach einem der Ansprüche 2 bis 6, **dadurch gekennzeichnet, dass** sie ferner Folgendes umfasst:

   • einen Subtrahierer (30) mit zwei Eingängen (31, 32) und einem Ausgang (35), der mit einem ersten seiner Eingänge (31) mit dem Ausgang des Verstärkers (26) verbunden ist, wobei der Ausgang (35) des Subtrahierers (30) das elektrische Signal liefert,
   • eine Verzögerungsleitung (34), die zwischen dem Ausgang (27) des Verstärkers (26) und einem zweiten der beiden Eingänge (32) des Subtrahierers (30) geschaltet ist,

   und dadurch, dass die Verzögerungsleitung (34) mittels ihrer Verzögerungszeit ($T_{LAR}$) parametrisiert werden kann, und dadurch, dass die Referenzbasis (42) mittels eines durch die Verzögerungszeit ($T_{LAR}$) gebildeten zweiten Parameters parametrisiert werden kann.

8. Vorrichtung nach Anspruch 1, **dadurch gekennzeichnet, dass** die Referenzbasis ein Zeitfilter liefert, das durch eine Zeitkonstante parametrisiert ist, dadurch, dass der Vergleich darin besteht, das Filter auf das elektrische Signal anzuwenden, wobei das für die Qualität des Vergleichs repräsentative Signal (B(t)) eine Differenz einer Anstiegszeit des gefilterten Signals mit einer Referenzanstiegszeit ist, wobei der Regelkreis dazu neigt, das für die Qualität des Vergleichs repräsentative Signal (B(t)) zu löschen.

9. Vorrichtung nach einem der vorherigen Ansprüche, **dadurch gekennzeichnet, dass** der Detektor (15) mittels eines Polarisationssignals ($U_{HT}$) polarisiert wird, und dadurch, dass die Vorrichtung einen Regelkreis (55, 57, 59) für das Polarisationssignal ($U_{HT}$) in Abhängigkeit von einer Differenz zwischen einem ersten aktuellen Parameter ($T_{FREF}$) und einem ersten Nennparameter ($T_{FREFO}$) umfasst.

10. Vorrichtung nach Anspruch 9, **dadurch gekennzeichnet, dass** der Regelkreis für das Polarisationssignal ($U_{HT}$) einen Multiplikator (57) zum Multiplizieren der Differenz zwischen dem ersten aktuellen Parameter ($T_{FREF}$) und dem ersten Nennparameter ($T_{FREFO}$) mit einer Verstärkungskonstanten ($k_{HTAA}$) und einen Addierer (59) zum Addieren eines Ergebnisses vom Multiplikator (57) zum aktuellen Wert des Polarisationssignals ($U_{HT}$) umfasst.

**11.** Vorrichtung nach Anspruch 9 oder 10, **dadurch gekennzeichnet, dass** eine Zeitkonstante des Regelkreises (55, 57, 59) für das Polarisationssignal ($U_{HT}$) stärker ist als eine Zeitkonstante des Regelkreises (46, 50, 52) des ersten Parameters ($T_{FREF}$) der Referenzbasis (42).

**Claims**

**1.** A spectrometry device for a beam of photons, the device (20) comprising:

- a detector (15) configured to receive the beam and to deliver at an output (24) an electrical signal that is a function of the energy of each photon of the beam (X) received,
- a reference database (42) configurable by means of a first parameter,
- a comparator (38) with two inputs (39, 40) and two outputs (41), the comparator (38) receiving at its first input (39) the electrical signal that is a function of the energy of a current photon, and at its second input (40) a reference signal delivered by the reference database (42), the comparator (38) being configured to establish a comparison between the electrical signal and the reference signal, the comparator (38) delivering at its first output a signal (E(t)) representing the energy of each photon of the beam and at its second output a quality factor (B(t)) of the comparison, **characterized in that** the device further comprises
- a feedback loop (46, 50, 52) allowing for adaptation of the first parameter of the reference database (42) so as to optimize the quality factor (B(t)), the feedback loop (46, 50, 52) intervening only to refine the determination of the signal (E(t)) representing the energy of the photons of the beam (X) subsequent to the current photon by adapting the first parameter of the reference database (42), without the feedback loop (46, 50, 52) intervening to determine the energy of the current photon.

**2.** The device according to claim 1, **characterized in that** the comparator (38) is configured to establish a comparison between the electrical signal that is a function of the energy of a current photon and the reference signal selected in the database as a function of a value of the first parameter defined based on values of the quality factor (B(t)) delivered by the comparator (38) receiving at its first input the electrical signal that is a function of the energy of photons preceding the current photon, and to give at the output a signal (E(t)) representing the energy of the current photon.

**3.** The device according to one of the preceding claims, **characterized in that** it further comprises:

- an amplifier (26) of the integrator type comprising one input (25) and one output (27), the input (25) of the amplifier (26) being connected to the output (24) of the detector (15),

and **in that** the reference database (42) is configured to generate several forms of signals, each corresponding to a front duration ($T_{FSIG}$) of a signal delivered by the amplifier (26) in response to the reception of a photon by the detector (15).

**4.** The device according to one of claim 2 or 3, **characterized in that** the reference database (42) is configured to associate, with each form of signal, a reference front duration ($T_{FREF}$) forming the first parameter of the reference database (42), the feedback loop (46, 50, 52) for slaving the reference front duration ($T_{FREF}$) to the front duration ($T_{FSIG}$) of a signal delivered by the amplifier (26) in response to the reception of a photon by the detector (15).

**5.** The device according to claim 4, **characterized in that** the signal (B(t)) representing the quality of the comparison represents a deviation between the front duration ($T_{FSIG}$) of a signal delivered by the amplifier (26) and the reference front duration ($T_{FREF}$) associated with the form of the signals received by the comparator (38) and **in that** the feedback loop for slaving the reference front duration ($T_{FREF}$) to the front duration ($T_{FSIG}$) of a signal delivered by the amplifier (26) is configured to modify the reference front duration (TFREF) in order to change the reference form as a function of the value of the signal (B(t)) representing the quality of the comparison.

**6.** The device according to claim 5, **characterized in that** the feedback loop for slaving the reference front duration ($T_{FREF}$) to the front duration ($T_{FSIG}$) of a signal delivered by the amplifier (26) comprises a multiplier (52) of the representative value (B(t)) by a gain constant ($k_{FAA}$) and an adder (50) adding a result issued from the multiplier (52) to the current value of the reference front duration ($T_{FREF}$).

**7.** The device according to one of claims 2 to 6, **characterized in that** it further comprises:

• a subtractor (30) with two inputs (31, 32) and one output (35), connected at a first of its inputs (31) to the output of the amplifier (26), the output (35) of the subtractor (30) delivering the electrical signal,
• a delay line (34) connected between the output (27) of the amplifier (26) and a second of the two inputs (32) of the subtractor (30),

and **in that** the delay line (34) is configurable by means of its delay duration ($T_{LAR}$) and **in that** the reference database (42) is configurable by means of a second parameter formed by the delay duration ($T_{LAR}$).

8. The device according to claim 1, **characterized in that** the reference database delivers a temporal filter configured by a time constant, **in that** the comparison consists in applying the filter to the electrical signal, the signal (B(t)) representing the quality of the comparison being a difference between a rise time of the filtered signal and a reference rise time, the feedback loop tending to cancel the signal (B(t)) representing the quality of the comparison.

9. The device according to one of the preceding claims, **characterized in that** the detector (15) is polarized by means of a polarization signal ($U_{HT}$) and **in that** the device comprises a feedback loop (55, 57, 59) of the polarization signal ($U_{HT}$) as a function of a deviation between a first current parameter ($T_{FREF}$) and a first nominal parameter ($T_{FREFO}$).

10. The device according to claim 9, **characterized in that** the feedback loop of the polarization signal ($U_{HT}$) comprises a multiplier (57) of the deviation between the first current parameter ($T_{FREF}$) and the first nominal parameter ($T_{FREFO}$) by a gain constant ($k_{HTAA}$) and an adder (59) adding a result issued from the multiplier (57) to the current value of the polarization signal ($U_{HT}$).

11. The device according to any one of claim 9 or 10, **characterized in that** a time constant of the feedback loop (55, 57, 59) of the polarization signal ($U_{HT}$) is stronger than a time constant of the feedback loop (46, 50, 52) of the first parameter ($T_{FREF}$) of the reference database (42).

FIG.1

FIG.2

FIG.3a

FIG.3b

FIG.4

FIG.5

## RÉFÉRENCES CITÉES DANS LA DESCRIPTION

**Documents brevets cités dans la description**

- US 2005230632 A
- FR 2925170 A1